# EUROPÄISCHE PATENTSCHRIFT

(11) **EP 3 823 118 B1**
(45) Veröffentlichungstag und Bekanntmachung des Hinweises auf die Patenterteilung: **04.01.2023**
(21) Anmeldenummer: 20205353.4
(22) Anmeldetag: 03.11.2020
(51) Int. Cl.: H02G 3/18, F16B 19/10, H01R 24/76, F16B 13/08, F16B 13/12

(54) **STECKDOSE MIT EINER FIXIERTEN ZENTRALSCHEIBE**
SOCKET WITH A FIXED CENTRAL DISC
PRISE DOTÉE D'UNE PLAQUE CENTRALE FIXE

(30) Priorität: 14.11.2019 DE 202019106355 U
(43) Veröffentlichungstag der Anmeldung: 19.05.2021
(73) Patentinhaber: ABB Schweiz AG, 5400 Baden (CH)
(72) Erfinder: Gerrath, Volker, 58791 Werdohl-Eveking (DE); Ewers, Manfred, 58239 Schwerte (DE)
(74) Vertreter: Wesch, Arno

(56) Entgegenhaltungen:
- DE-A1-102012 023 711
- GB-A- 2 443 197
- GB-A- 2 457 905
- US-A- 5 902 083

## Beschreibung

Die Erfindung betrifft eine Steckdose nach dem Oberbegriff des Patentanspruchs 1.

Eine solche Steckdose ist aus der DE 10 2012 023 711 A1 bekannt. Die GB 2 443 197 A zeigt eine mehrteilige Befestigungsvorrichtung mit einer Aufnahmehülse mit einer ringraumförmigen Ausnehmung. Die US 5,902,083 A zeigt eine Aufnahmehülse mit einem erweiterten unteren Bereich und die GB 2 457 905 A zeigt eine Aufnahmehülse mit einer Bohrung mit einem Durchmesser. Derzeit weisen SCHUKO (Marke) - Steckdosen eine Zentralscheibe zur Aufnahme eines SCHUKO (Marke) - Steckers auf. Diese Zentralscheiben werden üblicherweise mittels einer Zentralschraube auf einem Steckdoseneinsatz verschraubt. Im Objektbereich kommt es jedoch immer wieder vor, dass aufgrund von Vandalismus Zentralscheiben von Steckdosen abgeschraubt und entwendet werden. Überdies werden Zentralschrauben von manchen Endanwendern als unästhetisch angesehen. Hier besteht der Bedarf, die Zentralschraube durch eine nicht mehr auffällige Befestigungsart zu ersetzen, welche die gleiche Farbe wie die Zentralscheibe hat. Vor diesem Hintergrund besteht auch ein Bedarf, die Montage von Steckdosen zu vereinfachen bzw. zu beschleunigen.

Der Erfindung liegt daher die Aufgabe zugrunde, sowohl das unerwünschte Entfernen einer Zentralscheibe zu erschweren als auch deren Montage zu vereinfachen.

Erfindungsgemäß wird die voranstehende Aufgabe durch eine Steckdose mit den Merkmalen des Anspruchs 1 gelöst.

Danach ist die eingangs genannte Steckdose dadurch gekennzeichnet, dass die Befestigungsvorrichtung als Spreizvorrichtung ausgebildet ist, welche ein Spreizelement umfasst, welches bewegbar ist, um die Zentralscheibe festzulegen und/ oder zu Iösen.

Erfindungsgemäß ist erkannt worden, dass die eingangs genannten Probleme dadurch gelöst werden, dass ein Spreizelement allein durch Drücken oder Schieben eine Zentralscheibe festlegt und/ oder freigibt. Hierdurch werden die Montage und Demontage der Zentralscheibe vereinfacht. Erfindungsgemäß sind sowohl das Festlegen als auch das Freigeben der Zentralscheibe durch Drücken des Spreizelements in einer einzigen Richtung, nämlich bevorzugt in Richtung des Bodens der Zentralscheibe, realisiert. Es sind keine aufwendigen Schraubvorgänge mehr nötig, um die Zentralscheibe festzulegen oder freizugeben. Die erfindungsgemäße Steckdose weist daher keine Schrauben auf, um die Zentralscheibe festzulegen.

Das anstelle einer Schraube verwendete Spreizelement weist keinen Schlitz oder keine Nut für den Formschluss mit einem Schraubendreher auf und kann daher an dem Bereich glatt ausgebildet sein, der üblicherweise mit einem Schlitz oder Kreuzschlitz versehen ist. Ein solches Spreizelement kann flächenbündig, glatt und farblich einheitlich mit dem Boden der Zentralscheibe ausgebildet sein. Hierdurch wird das unerwünschte Entfernen einer Zentralscheibe erschwert, weil es für einen Unbefugten schwer wird, das Spreizelement zu erkennen. Das Spreizelement kann bündig mit dem Boden der Zentralscheibe abschließen oder sogar in diesem verschwinden. So sind keine Überstände zu befürchten, die einen Nutzer stören könnten. Die Verwendung einer Spreizvorrichtung mit einem Spreizelement erlaubt auch eine farblich einheitliche Aufmachung sowohl des Bodens der Zentralscheibe als auch zumindest des Teils des Spreizelements, welches dem Nutzer zugewandt ist.

Vorteilhaft ist das Spreizelement gegen oder in Richtung des Bodens bewegbar. Alternativ oder zusätzlich ist das Spreizelement relativ zur Zentralscheibe bewegbar. Ein Spreizelement, welches gegen und in den Boden der Zentralscheibe bewegbar ist, ist leicht für einen Monteur zugänglich. Ein Spreizelement, welches relativ zur Zentralscheibe bewegbar ist, kann als separates Bauteil ausgebildet sein.

Das Spreizelement ist als Spreizdorn ausgebildet, welcher in eine Spreizhülse drückbar ist. Hierdurch wird der Spreizdorn teleskopartig in der Spreizhülse geführt.

Die Spreizvorrichtung weist eine Spreizhülse auf, welche mit einer Aufnahmehülse in Eingriff bringbar ist, um die Zentralscheibe festzulegen. Eine Spreizhülse kann mit einem äußeren Rand oder Umfang in eine Zahnung oder eine Nutstruktur der Aufnahmehülse reversibel form- und kraftschlüssig eingreifen.

Vorteilhaft ist der Spreizdorn in der Spreizhülse schiebbar aufgenommen, wobei der Spreizdorn die Spreizhülse durch seine Schiebebewegung in dieser derart aufweitet, dass die Spreizhülse mit der Aufnahmehülse in Eingriff gelangt. Durch die Schiebebewegung des Spreizdorns kann gesteuert werden, wie weit sich die Spreizhülse aufweitet.

Die Spreizvorrichtung weist vorteilhaft nur drei Bauteile auf, nämlich den Spreizdorn, die Spreizhülse und die Aufnahmehülse.

Weiter vorteilhaft ist in der Spreizhülse der Spreizdorn schiebbar aufgenommen, welcher den äußeren Umfang der Spreizhülse durch seine Schiebebewegung derart verringert, dass diese außer Eingriff mit der Aufnahmehülse gelangt. Nur durch eine Schiebebewegung kann so die Zentralscheibe wieder zur Demontage freigegeben werden.

Der Spreizdorn weist eine Verjüngung auf. Die Spreizhülse kann in diese Verjüngung eingreifen und/ oder einfedern und so ihren äußeren Umfang verringern.

Die Spreizhülse weist einen Innenrand auf, welcher in die Verjüngung eingleiten oder eingreifen kann, so dass die Spreizhülse ihren äußeren Umfang so verringern kann, dass diese außer Eingriff mit der Aufnahmehülse gelangt. Konkret könnte bzw. könnten ein Zahn oder mehrere Zähne am äußeren Umfang außer Eingriff mit einer Zahnung der Aufnahmehülse gelangen. Hierdurch kann die Zentralscheibe wieder zur Demontage freigegeben werden.

Ist die weitere Komponente als Unterputzeinsatz ausgebildet, ist es denkbar, dass zwischen einem Tragring der Steckdose und dem Rahmen der die Zentralscheibe aufnimmt, eine Tapete angeordnet ist. Auch wenn die Zentralscheibe dadurch vom Unterputzeinsatz beabstandet ist, kann die Spreizvorrichtung durch geeignete Zahnungen der Aufnahmehülse und der Spreizhülse die Zentralscheibe fixieren.

Vorteilhaft steht die Spreizvorrichtung nicht über den Boden in Richtung eines Nutzers über. So entstehen keine unerwünschten Überstände. Bevorzugt schließen die Spreizhülse und der Spreizdorn bündig mit dem Boden der Zentralscheibe ab.

Vorteilhaft wird die Steckdose im Hausbereich, insbesondere in Wohn- oder Büroräumen, verwendet.

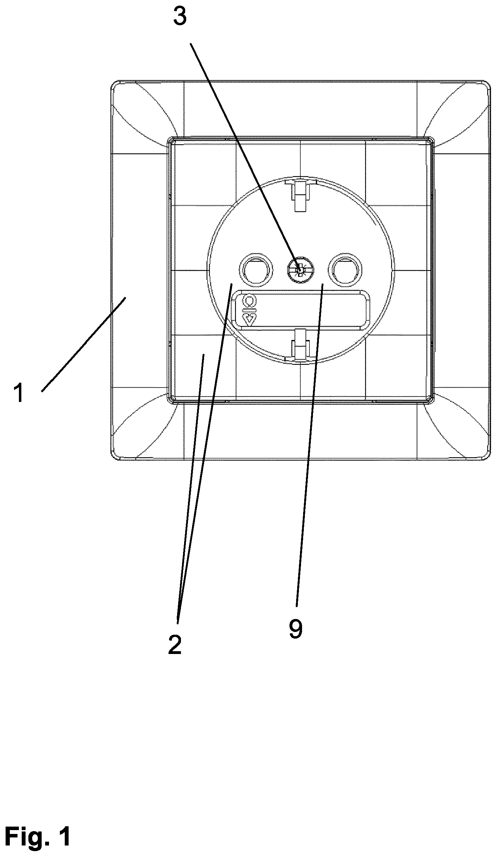

In der Zeichnung zeigen
- Fig. 1: eine Steckdose gemäß dem Stand der Technik, welche eine Zentralscheibe, eine Befestigungsschraube und einen Rahmen aufweist,

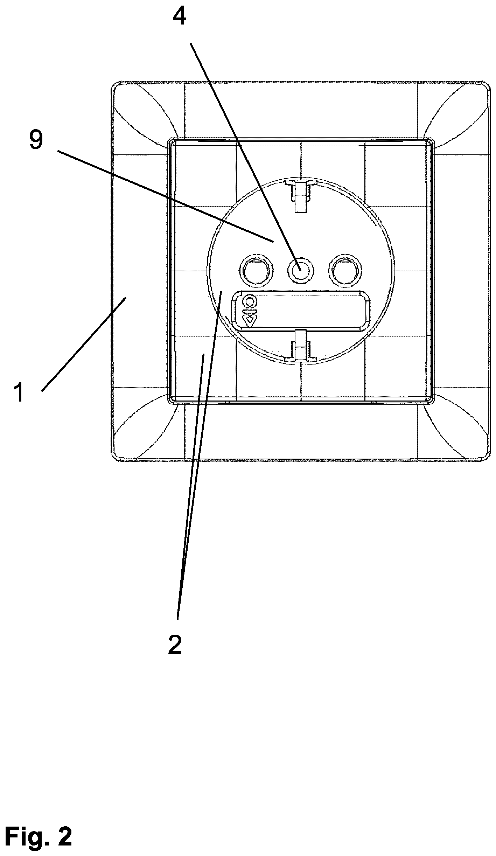

- Fig. 2: eine Steckdose mit erhöhtem Berührungsschutz und einer Spreizvorrichtung als Schraubenersatz, wobei die Steckdose eine Zentralscheibe und einen Rahmen umfasst und wobei anstelle einer mittig angeordneten Befestigungsschraube eine Spreizvorrichtung vorgesehen ist,

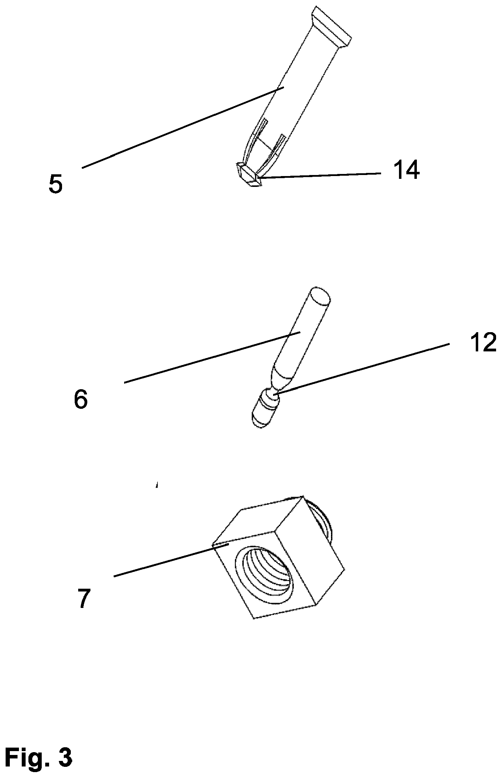

- Fig. 3: von oben nach unten eine Spreizhülse, einen Spreizdorn und eine Aufnahmehülse als Bauteile der Spreizvorrichtung in perspektivischer Ansicht,

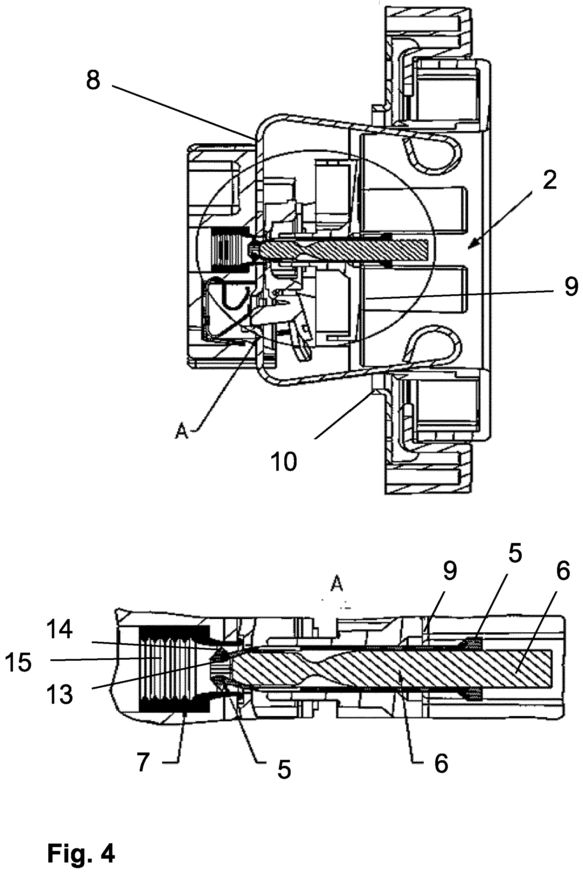

- Fig. 4: eine Darstellung einer Montagestellung der Steckdose gemäß Fig. 2, in welcher sowohl eine Spreizhülse als auch ein Spreizdorn in die Zentralscheibe hineinragen, wobei der Spreizdorn über das zentralscheibenbodenseitige Ende der Spreizhülse weiter in die Zentralscheibe hineinragt, also dem Nutzer weiter entgegenragt, und die Spreizhülse noch nicht endmontagetauglich in die Aufnahmehülse eintaucht,

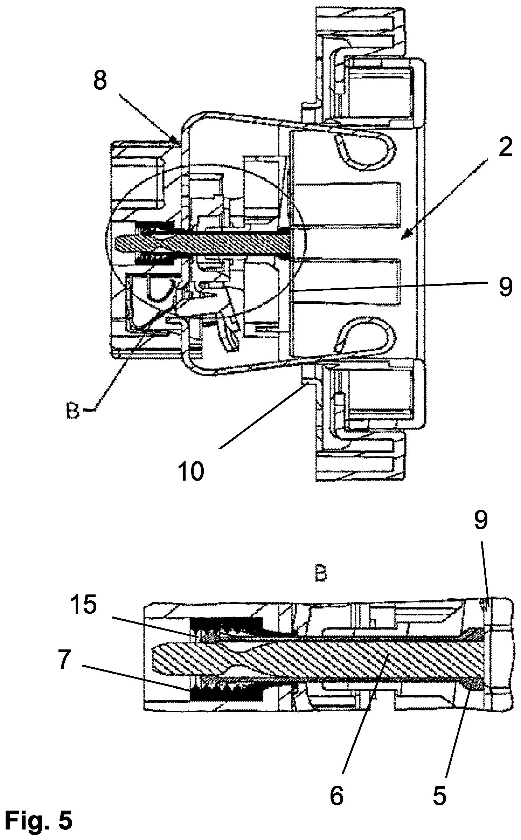

- Fig. 5: eine weitere Darstellung der Montage, wobei nämlich zur Befestigung der Zentralscheibe am Unterputzeinsatz der Spreizdorn und die Spreizhülse bis zum Boden der Zentralscheibe eingedrückt werden, so dass deren Enden bündig mit dem Boden der Zentralscheibe sind, wobei dieser Vorgang ein Aufspreizen der Spreizhülse und somit ein Verkrallen derer in der Aufnahmehülse bewirkt,

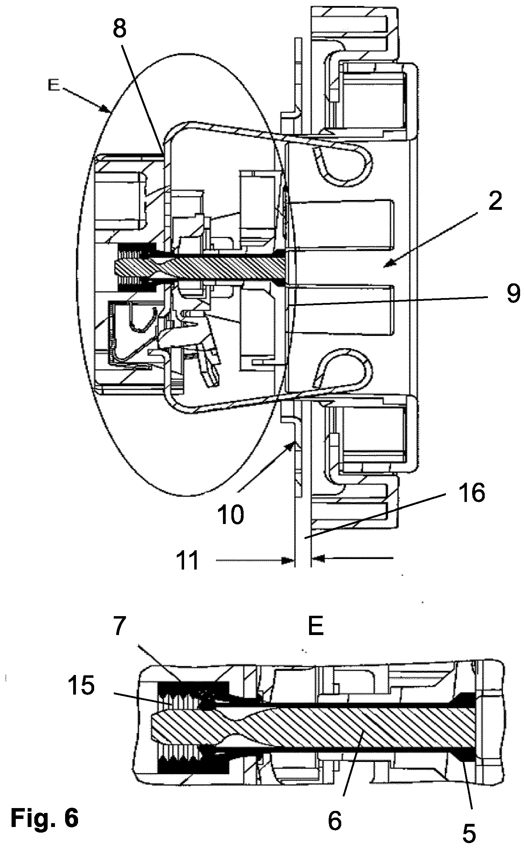

- Fig. 6: eine Darstellung des Zusammenspiels der Zahnung in der Aufnahmehülse und dem Zahn oder äußeren Umfang der Spreizhülse, wobei die Zahnung so ausgelegt ist, dass eine Befestigung der Zentralscheibe auch dann möglich ist, wenn sich diese durch eine auf dem Tragring aufgebrachte Tapete vom Unterputzeinsatz entfernt, so dass ein so genannter Tapetenausgleich gegeben ist, und

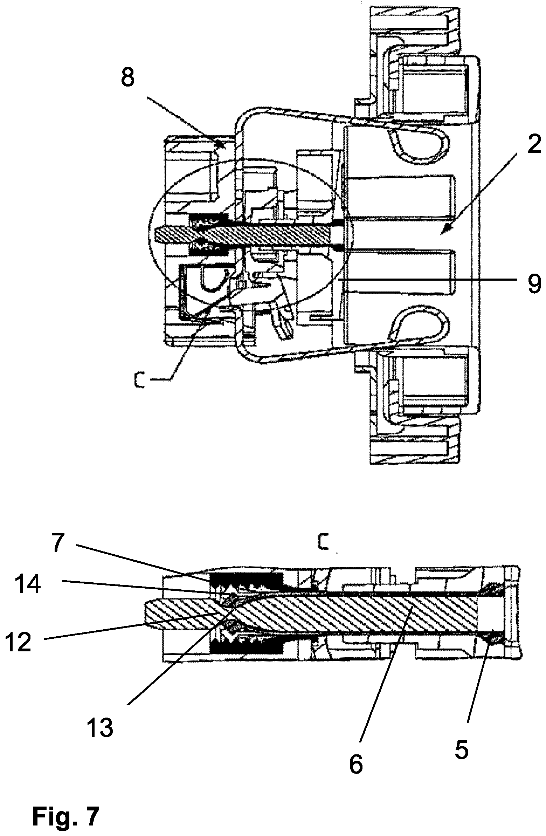

- Fig. 7: eine Darstellung des Lösens der Zentralscheibe, wobei zum Lösen der Zentralscheibe der Spreizdorn weiter in die Spreizhülse hinein gedrückt wird, wobei eine Freimachung oder Verjüngung am Spreizdorn für ein Zurückfedern der Spreizhülse in diese sorgt und somit den Zahn oder den äußeren Umfang der Spreizhülse aus der Zahnung der Aufnahmehülse herauslöst, so dass die Befestigung der Zentralscheibe am Unterputzesatz gelöst ist und die Zentralscheibe entnommen werden kann.

Fig. 1 zeigt eine Steckdose gemäß dem Stand der Technik. Eine von einem Rahmen 1 umfangene Zentralscheibe 2 ist durch eine Zentralschraube 3 mit einem nicht dargestellten Steckdoseneinsatz verschraubt. Fig. 1 zeigt insoweit eine Steckdose, umfassend eine Zentralscheibe 2 mit einem dem Nutzer im eingebauten Zustand zugewandten, haptisch zugänglichen Boden 9 und eine Befestigungsvorrichtung, mit welcher die Zentralscheibe 2 an einer weiteren Komponente der Steckdose reversibel festgelegt ist.

Fig. 2 zeigt eine Steckdose mit erhöhtem Berührungsschutz und einer Spreizvorrichtung 4 als Schraubenersatz. Die Steckdose umfasst eine Zentralscheibe 2 und einen diese umgebenden Rahmen 1, wobei anstelle einer mittig angeordneten Zentralschraube nur die Spreizvorrichtung 4 vorgesehen ist. In der Zentralscheibe 2 sind beidseits der Spreizvorrichtung 4 zwei Löcher zur Aufnahme eines Steckers ausgebildet. Die Zentralscheibe 2 und der Rahmen 1 sind bevorzugt aus einem Kunststoff oder einem Trägerteil aus Kunststoff in Verbindung mit einer Metallabdeckung gefertigt.

Fig. 2 zeigt insoweit eine Steckdose, umfassend eine Zentralscheibe 2 mit einem dem Nutzer im eingebauten Zustand zugewandten, haptisch zugänglichen Boden 9 und eine Befestigungsvorrichtung, mit welcher die Zentralscheibe 2 an dem Steckdoseneinsatz (Unterputz- oder Aufputzeinsatz) befestigt ist. Die Befestigungsvorrichtung ist als Spreizvorrichtung 4 ausgebildet, welche nur ein Spreizelement umfasst, welches gegen oder in Richtung des Bodens 9 bewegbar ist, um die Zentralscheibe 2 festzulegen und wieder zu lösen.

Fig. 3 zeigt die drei separaten Bauteile der Spreizvorrichtung, nämlich eine Spreizhülse 5, einen Spreizdorn 6 und eine Aufnahmehülse 7.

Das einzige Spreizelement ist als Spreizdorn 6 ausgebildet, welcher in die Spreizhülse 5 drückbar ist. Die Spreizvorrichtung 4 weist weiter die Spreizhülse 5 auf, welche mit der Aufnahmehülse 7 in Eingriff bringbar ist, um die Zentralscheibe 2 festzulegen.

In den Figuren 4 bis 6 ist im Detail dargestellt, dass in der Spreizhülse 5 der Spreizdorn 6 schiebbar aufgenommen ist, welcher die Spreizhülse 5 durch seine Schiebebewegung in dieser derart aufweitet, dass die Spreizhülse 5 mit der Aufnahmehülse 7 in Eingriff gelangt.

In Figur 7 ist konkret dargestellt, dass in der Spreizhülse 5 der Spreizdorn 6 schiebbar aufgenommen ist, welcher den äußeren Umfang 14 der Spreizhülse 5 durch seine Schiebebewegung derart verringert, dass diese außer Eingriff mit der Aufnahmehülse 7 gelangt.

Der Spreizdorn 6 weist hierzu eine Verjüngung 12 auf. Die Spreizhülse 5 weist nämlich einen Innenrand 13 auf, welcher in die Verjüngung 12 federnd eingleiten oder eingreifen kann, so dass die Spreizhülse 5 ihren äußeren Umfang 14 so verringern kann, dass diese außer Eingriff mit der Aufnahmehülse 7 gelangt.

Fig. 4 zeigt in einer oberen Übersichtsdarstellung und einer unteren Detaildarstellung A eine Montagestellung der Steckdose gemäß Fig. 2. In der Montagestellung ragen sowohl die Spreizhülse 5 als auch der Spreizdorn 6 in die Zentralscheibe 2 hinein, nämlich über deren Boden 9 in Richtung eines Nutzers hinaus. Die Spreizdorn 6 steht dabei außerdem über das Ende der Spreizhülse 5 weiter in die Zentralscheibe 2 hinein, ragt also weiter vom Boden 9 ab, als die Spreizhülse 5. Die Spreizhülse 5 taucht noch nicht endmontagetauglich mit ihrem dem Nutzer abgewandten Ende in die Aufnahmehülse 7 ein. Fig. 4 zeigt konkret, dass die weitere Komponente als Unterputzeinsatz 8 ausgebildet ist.

Fig. 5 zeigt in einer oberen Übersichtsdarstellung und einer unteren Detaildarstellung B, dass zur Montage, d.h. zur Befestigung der Zentralscheibe 2 am Unterputzeinsatz 8 der Spreizdorn 6 und die Spreizhülse 5 bis zum Boden 9 der Zentralscheibe 2 eingedrückt werden, so dass deren Enden bündig mit dem Boden 9 der Zentralscheibe 2 sind. Dieser Vorgang bewirkt ein Aufspreizen der Spreizhülse 5 und somit ein Verkrallen derer in der Aufnahmehülse 7. Fig. 5 zeigt konkret, dass die Spreizvorrichtung 4 nicht über den Boden 9 in Richtung eines Nutzers übersteht.

Fig. 6 zeigt in einer oberen Übersichtsdarstellung und einer unteren Detaildarstellung E, dass das Zusammenspiel der Zahnung 15 in der Aufnahmehülse 7 und dem Zahn bzw. äußeren Umfang 14 der Spreizhülse 5 so ausgelegt ist, dass eine Befestigung der Zentralscheibe 2 auch dann möglich ist, wenn sich diese durch eine auf dem Tragring 10 aufgebrachte Tapete 16 vom Unterputzeinsatz 8 entfernt. Ein so genannter Tapetenausgleich 11 ist hierdurch gegeben. Fig. 6 zeigt konkret, dass zwischen einem Tragring 10 der Steckdose und dem Rahmen 1, in dem die Zentralscheibe 2 eingesetzt ist, eine Tapete 16 angeordnet sein kann.

Fig. 7 zeigt in einer oberen Übersichtsdarstellung und einer unteren Detaildarstellung C, dass zum Lösen der Zentralscheibe 2 der Spreizdorn 6 mit Hilfe beispielsweise eines schmalen Schraubendrehers weiter in die Spreizhülse 5 hineingedrückt wird. Dabei sorgt eine Freimachung oder Verjüngung 12 am Spreizdorn 6 für ein Zurückfedern der Spreizhülse 5 in die Verjüngung 12 hinein. Das Zurückfedern löst den äußeren Umfang 14 bzw. einen Zahn oder Zähne der Spreizhülse 5 aus der Zahnung 15 der Aufnahmehülse 7 heraus. Die Befestigung der Zentralscheibe 2 am Unterputzeinsatz 8 ist somit gelöst, die Zentralscheibe 2 kann entnommen werden.

Die Fig. 4 bis 7 stellen Schnittansichten der Steckdose dar, wobei neben der Zentralscheibe 2 und dem Unterputzeinsatz 8 auch weitere Komponenten einer Steckdose dargestellt sind. Die Zentralscheibe 2 bzw. deren Boden 9 ist für einen Nutzer haptisch zugänglich, nämlich berührbar. Der Spreizdorn 6 kann die gleiche Farbe wie die Zentralscheibe 2 aufweisen und/ oder aus dem gleichen Material gefertigt sein wie die Zentralscheibe 2.

**Bezugszeichenliste**

| | |
|---|---|
| 1 | Rahmen |
| 2 | Zentralscheibe |
| 3 | Zentralschraube |
| 4 | Spreizvorrichtung |
| 5 | Spreizhülse |
| 6 | Spreizdorn |
| 7 | Aufnahmehülse |
| 8 | Unterputzeinsatz |
| 9 | Boden von 2 |
| 10 | Tragring |
| 11 | Tapetenausgleich |
| 12 | Verjüngung von 6 |
| 13 | Innenrand von 5 |
| 14 | Äußerer Umfang von 5 |
| 15 | Zahnung von 7 |
| 16 | Tapete |

## Patentansprüche

1. Steckdose, umfassend eine Zentralscheibe (2) mit einem im eingebauten Zustand haptisch zugänglichen Boden (9) und eine Befestigungsvorrichtung, mit welcher die Zentralscheibe (2) an einem als Unterputz- oder Aufputzeinsatz ausgeführtem Steckdoseneinsatz festgelegt ist,
**dadurch gekennzeichnet, dass** die Befestigungsvorrichtung als Spreizvorrichtung (4) ausgebildet ist, welche ein Spreizelement umfasst, welches bewegbar ist, um die Zentralscheibe (2) festzulegen und/ oder zu lösen, wobei das Spreizelement als Spreizdorn (6) ausgebildet ist, welcher in eine Spreizhülse (5) drückbar ist, wobei die Spreizvorrichtung (4) die Spreizhülse (5) aufweist, welche mit einer Aufnahmehülse (7) in Eingriff bringbar ist, um die Zentralscheibe (2) festzulegen, wobei der Spreizdorn (6) eine Verjüngung (12) aufweist und wobei die Spreizhülse (5) einen Innenrand (13) aufweist, welcher in die Verjüngung (12) eingleiten oder eingreifen kann, so dass die Spreizhülse (5) ihren äußeren Umfang (14) so verringern kann, dass diese außer Eingriff mit der Aufnahmehülse (7) gelangt, wobei in der Aufnahmehülse (7) eine Zahnung (15) vorgesehen ist.

2. Steckdose nach Anspruch 1, **dadurch gekennzeichnet, dass** das Spreizelement gegen oder in Richtung des Bodens (9) und/ oder relativ zur Zentralscheibe (2) bewegbar ist.

3. Steckdose nach einem der voranstehenden Ansprüche, **dadurch gekennzeichnet, dass** in der Spreizhülse (5) der Spreizdorn (6) schiebbar aufgenommen ist, welcher die Spreizhülse (5) durch seine Schiebebewegung in dieser derart aufweitet, dass die Spreizhülse (5) mit der Aufnahmehülse (7) in Eingriff gelangt.

4. Steckdose nach einem der voranstehenden Ansprüche, **dadurch gekennzeichnet, dass** in der Spreizhülse (5) der Spreizdorn (6) schiebbar aufgenommen ist, welcher den äußeren Umfang (14) der Spreizhülse (5) durch seine Schiebebewegung derart verringert, dass diese außer Eingriff mit der Aufnahmehülse (7) gelangt.

5. Steckdose nach einem der voranstehenden Ansprüche, **dadurch gekennzeichnet, dass** zwischen einem Tragring (10) der Steckdose und der Zentralscheibe (2) eine Tapete angeordnet ist.

6. Steckdose nach einem der voranstehenden Ansprüche, **dadurch gekennzeichnet, dass** die Spreizvorrichtung (4) nicht über den Boden (9) übersteht.

## Claims

1. Socket, comprising a central disc (2) having a base (9) that is accessible by touch when installed and a fixing device, with which the central disc (2) is fixed to a socket insert designed as a flush-mounted or surface-mounted insert,
**characterized in that** the fixing device is designed as an expansion device (4) which comprises an expansion element which is movable in order to fix and/or to loosen the central disc (2), wherein the expansion element is designed as an expanding mandrel (6) which can be pressed into an expansion sleeve (5), wherein the expansion device (4) has the expansion sleeve (5), which can be brought into engagement with a receiving sleeve (7) in order to fix the central disc (2), wherein the expanding mandrel (6) has a taper (12) and wherein the expansion sleeve (5) has an inner rim (13) which can slide or engage in the taper (12), so that the expansion sleeve (5) can reduce its external circumference (14) such that this comes out of engagement with the receiving sleeve (7), wherein toothing (15) is provided in the receiving sleeve (7) .

2. Socket according to Claim 1, **characterized in that** the expansion element is movable counter to or in the direction of the base (9) and/or relative to the central disc (2).

3. Socket according to one of the preceding claims, **characterized in that** the expanding mandrel (6) is accommodated such that it can slide in the expansion sleeve (5), the expanding mandrel (6) expanding the expansion sleeve (5) by its sliding movement in the latter in such a way that the expansion sleeve (5) comes into engagement with the receiving sleeve (7).

4. Socket according to one of the preceding claims, **characterized in that** the expanding mandrel (6) is accommodated such that it can slide in the expansion sleeve (5), the expanding mandrel (6) reducing the outer circumference (14) of the expansion sleeve (5) by its sliding movement in such a way that the expansion sleeve (5) comes out of engagement with the receiving sleeve (7) .

5. Socket according to one of the preceding claims, **characterized in that** a wallpaper is arranged between a support ring (10) of the socket and the central disc (2).

6. Socket according to one of the preceding claims, **characterized in that** the expansion device (4) does not protrude beyond the base (9).

## Revendications

1. Prise, comprenant une plaque centrale (2) avec un fond (9) accessible au toucher à l'état monté et un dispositif de fixation, avec lequel la plaque centrale (2) est immobilisée sur un insert de prise réalisé sous forme d'insert encastré ou en saillie,
**caractérisée en ce que** le dispositif de fixation est configuré sous forme de dispositif d'écartement (4) qui comprend un élément d'écartement qui est mobile pour immobiliser et/ou détacher la plaque centrale (2), l'élément d'écartement étant configuré sous forme de mandrin d'écartement (6), qui peut être pressé dans un manchon d'écartement (5), le dispositif d'écartement (4) présentant le manchon d'écartement (5) qui peut être amené en prise avec un manchon de réception (7) pour immobiliser la plaque centrale (2), le mandrin d'écartement (6) présentant un rétrécissement (12) et le manchon d'écartement (5) présentant un bord intérieur (13), qui peut s'insérer ou s'engager dans le rétrécissement (12), de telle sorte que le manchon d'écartement (5) peut réduire sa circonférence extérieure (14) de telle sorte que celui-ci se dégage du manchon de réception (7), une denture (15) étant prévue dans le manchon de réception (7).

2. Prise selon la revendication 1, **caractérisée en ce que** l'élément d'écartement peut être déplacé à l'encontre de ou dans la direction du fond (9) et/ou par rapport à la plaque centrale (2).

3. Prise selon l'une quelconque des revendications précédentes, **caractérisée en ce que** le mandrin d'écartement (6) est reçu de manière coulissante dans le manchon d'écartement (5), lequel élargit le manchon d'écartement (5) par son mouvement de coulissement dans celui-ci de telle sorte que le manchon d'écartement (5) vient en prise avec le manchon de réception (7).

4. Prise selon l'une quelconque des revendications précédentes, **caractérisée en ce que** le mandrin d'écartement (6) est reçu de manière coulissante dans le manchon d'écartement (5), lequel réduit la circonférence extérieure (14) du manchon d'écartement (5) par son mouvement de coulissement de telle sorte que celui-ci se dégage du manchon de réception (7).

5. Prise selon l'une quelconque des revendications précédentes, **caractérisée en ce qu'**un papier peint est agencé entre un anneau de support (10) de la prise et la plaque centrale (2).

6. Prise selon l'une quelconque des revendications précédentes, **caractérisée en ce que** le dispositif d'écartement (4) ne dépasse pas au-dessus du fond (9).
